Europäisches Patentamt

European Patent Office

Office européen des brevets

(11) Publication number: **0 220 047**
**A2**

## (12) EUROPEAN PATENT APPLICATION

(21) Application number: **86307937.2**

(22) Date of filing: **14.10.86**

(51) Int. Cl.⁴: **G 01 V 5/04**
**E 21 B 47/12**

(30) Priority: **18.10.85 GB 8525794**

(43) Date of publication of application:
**29.04.87 Bulletin 87/18**

(84) Designated Contracting States: **BE DE ES FR**

(71) Applicant: **BROWN ELECTRONICS LIMITED**
**Brook House,Ham**
**Marlborough Wiltshire SN8 3BR (GB)**

(72) Inventor: **Brown, Arthur Charles**
**Brook House Ham**
**Marlborough Wiltshire SN8 3BR (GB)**

(74) Representative: **Wood, John Irwin**
**Hobart House Grosvenor Place**
**London SW1X 7AE (GB)**

(54) Borehole logging equipment.

(57) A sonde (7) for logging a borehole has a low level (typically 3 milli-curie) radio-active source (8) and three detection devices (9, 10, 11). A single core cable (6) transmits power to the sonde and also transmits back data from the detection devices to a remote unit (4) which includes a recording device (12).

EP 0 220 047 A2

**Description**

## IMPROVEMENTS IN OR RELATING TO BOREHOLE LOGGING EQUIPMENT

This invention relates to borehole logging equipment and in particular is concerned with the type of equipment in which a sonde carrying a radio active source is lowered into a borehole and reflected signals are collected by receivers in the sonde and transmitted for analysis to remote equipment on the surface.

In conventional equipment the borehole is logged by a sonde which is in the form of a long tubular shell having a radiation source of a strength of about fifty milli-curies at its base. Three detector crystals are set in the shell spaced upward from the source. The crystal nearest the source is known as the high resolution crystal and the one above it is known as the long spacing crystal. As remote from the source as possible and at the top of the shell is the third crystal which picks up natural gamma radiation from the surrounding strata. The first and second crystals collect information in the form of radiation reflected from the strata through. which the radiation source has passed.

The shell is connected to the surface by a cable which not only suspends the shell but also acts as a conductor for sending signals from the crystals in the shell to the surface. The cable has a multiple function. It usually has a number of cores which give it strength for supporting the shell and separate conductor cores, one for transmitting signals from each of the crystals together with a power supply core which sends electrical power from the surface to the shell. The whole is enclosed within an earthing sheath.

This known logging equipment suffers from two principal disadvantages. The first is that due to the source strength it is necessary to space the crystals some distance apart and this requires the shell to be of a substantial length. A typical length is from 3 to l0 metres. This means that it is correspondingly heavy and requires a strong cable to support it. Furthermore the multi core nature of the cable necessarily adds to the weight of the cable and this requires substantial winding equipment on the surface. The equipment more over has use over a limited depth of hole only otherwise the strength of the cable is insufficient to carry both its own weight and that of the sonde.

Clearly if the size and weight of the sonde and the cable can be reduced then the sonde would be able to be used over greater depths and an object of the present invention is to provide an improved form of borehole logging equipment which will operate over greater depths that has been possible previously and which is inherently more safe than known equipment.

According to the present invention borehole logging equipment includes a sonde and an associated cable for supporting the sonde in a borehole and for transmitting information from the sonde to remote equipment on the surface, in which the sonde includes a relatively low radiation source and a plurality of detection crystals situated in line within the sonde and arranged for connection to a single core in the cable for the transmission of information by pulses of different voltage levels from the crystals to the remote equipment, which is the same cable supplying power to the sonde.

The voltage levels are direct current and are preferably of the order of six to twenty-four volts. The power is conveniently supplied along the cable to the sonde from a power source associated with the remote equipment. There are preferably three detection crystals in the sonde, two situated near the source and one remote from it for detecting natural radiation.

The relatively low radiation source has a value not exceeding five milli-curies and is preferably of the order of three milli-curies.

The remote equipment is arranged to be located at or adjacent the top of the borehole and maybe incorporated as part of a drilling unit or free-standing over a borehole. The remote equipment preferably includes depth indicator and recording means such as a cassette for recording signals from the three crystals.

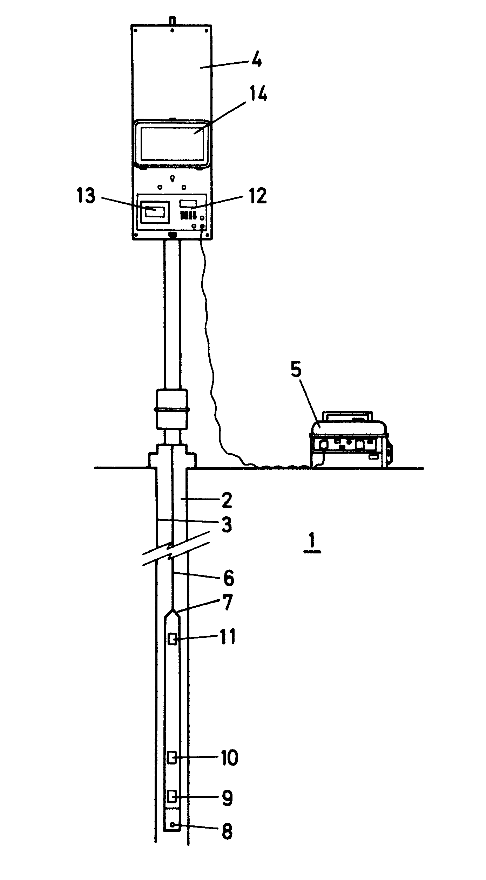

In order that the invention may be readily understood one example of borehole logging equipment in accordance therewith will now be described with reference to the accompanying drawing which is a schematic view of a cross-section through a borehole.

Referring now to the drawing the earth l has a borehole 2 drilled in it which is lined with a smooth steel casing 3 through out its length. A monitoring and logging unit 4 is situated at the top of the borehole 2 mounted on a derrick including a winding unit (not shown) and has connected to it a portable power generator 5 which supplies a regulated voltage of 230 VAC, or 24 VDC. From the unit 4 depends a single core cable conductor 6 which suspends a sonde 7 some 250 metres below the surface of the earth.

The sonde 7 comprises at its base a radio active source 8 having a value of three milli-curies and immediately above that a crystal 9 which is a high resolution crystal and above this is a second crystal l0 which is a long spacing crystal. These two crystals are basically density detectors. At the top of the sonde 7 is a further crystal ll which detects natural gamma radiation from the surrounding strata.

The overall length of the sonde is l metre. The sonde is connected to the cable conductor 6 and the sonde connects internally with this conductor to each of the crystals 9, l0, ll.

When power is applied to the sonde the crystals generate information and this is sent at three modulated different voltage levels over the single core of the conductor 6 to the unit 4.

The unit 4 includes a cassette unit l2 which carries a recording cassette upon which the information is recorded as well as a depth indicator l3 and a winding control l4.

The cassette l2 can record up to 600 metres of logging without being changed and when logging is completed the cassette can be sent away to a laboratory else where without the need of a mobile laboratory being on-site.

This feature of the recording on the cassette I2 is extremely advantageous over previous methods where a van had to be on site and to analyse the signals as they arrived from the sonde. This meant that the van was often not in use for a large part of the time whilst the borehole was being dug and therefore was under utilised. Being able to analyse the results remotely means that the equipment is able to be used more efficiently and hence more cheaply and also less equipment is necessary to be taken into difficult terrains where access for vehicles is not easy.

The use of low value radio-active source means that there is very little risk of hazards occuring due to radio-activity. In practical example sources of one milli-curie to three milli-curies have been used based on a Caesium I37 radio-active source. It will be appreciated that compared with an equivalent 50 to a I00 millie-curie source used in former equipment the risks of any radiation hazard to personnel is minimised. The results of the density equivalent measurements have not been affected by the change in the level of the value of sources.

The use of the single cable with the three voltage level pulses which are sent down modulated and then returned have led to a substantial lightening in the weight of the cable and therefore greater depths are able to be logged and also the winding equipment for the cable in the sonde can be less massive than previously and hence easier to transport over difficult countryside.

## Claims

I. Borehole logging equipment including a sonde and an associated cable for supporting the sonde in a borehole and for transmitting information from the sonde to remote equipment on the surface, in which the sonde includes a relatively low radiation source and a plurality of detection crystals situated in line within the sonde and arranged for connection to a single core in the cable for the transmission of information by pulses of different voltage levels from the crystals to the remote equipment, which is the same cable supplying power to the sonde.

2. Equipment as claimed in Claim I, in which the voltage levels are direct current and of the order of six to twenty-four volts.

3. Equipment as claimed in Claim I or Claim 2, in which power supplied to the sonde over the single core of the cable is supplied from a source in or associated with the remote equipment.

4. Equipment as claimed in any preceding claim and including three detection crystals in the sonde, two situated near the source and remote from it, the remote crystal being arranged to detect natural radiation.

5. Equipment as claimed in any preceding claim in which the source has a value not exceeding five milli-curies.

6. Equipment as claimed in Claim 5 in which the source has a value of the order of three milli-curies.

7. Equipment as claimed in any preceding claim in which the remote equipment is located at or adjacent the top of the borehole and is incorporated as part of a drilling unit.

8. Equipment as claimed in any preceding claim in which the remote equipment includes a depth indicator and recording means for recording signals from the detection crystals.

9. Equipment as claimed in Claim 8 in which the recording means is a tape cassette.

I0. Equipment substantially as hereinbefore described with reference to the accompanying drawing.

0220047